# EUROPÄISCHE PATENTANMELDUNG

(11) **EP 2 540 368 A1**
(43) Veröffentlichungstag der Anmeldung: **02.01.2013**
(21) Anmeldenummer: 12002861.8
(22) Anmeldetag: 24.04.2012
(51) Int. Cl.: B01D 29/21, B01D 29/23, B01D 46/52

(54) **Filterelement**

(30) Priorität: 01.07.2011 DE 102011106304
(71) Anmelder: Robert Bosch GmbH, 70469 Stuttgart (DE)
(72) Erfinder: Brenneis, Daniel, 68723 Plankstadt (DE)
(74) Vertreter: Thürer, Andreas

(57) **Zusammenfassung**

Offenbart ist ein Filterelement zur Filterung eines Fluids, insbesondere eines Hydraulik-Fluids, mit einer Folge von Hauptfaltungen (8a,8b), wobei erfindungsgemäß an zumindest einer der Hauptfaltungen eine Nebenfaltung (12a,12b) angeordnet ist.

## Beschreibung

Die Erfindung betrifft ein Filterelement gemäß dem Oberbegriff des Patentanspruchs 1.

Es sind gefaltete oder plissierte Filtermatten bzw. Filterelemente bekannt, über die ein Fluidstrom, insbesondere ein Hydraulikmittel- oder Druckmittelstrom, oder ein Belüftungsstrom filterbar ist. Das Filterelement ist dabei dauerhaft in Faltungen gelegt, die sich in einer Folge entlang dem Filterelement erstrecken. Die Faltungen sind dabei sternförmig ausgestaltet. Das Filterelement ist abgelängt und zu einem Zylinder gerundet, wobei Endabschnitte des Filterelementes vorzugsweise mit einem Kleber, insbesondere einem zwei Komponentenkleber, oder mittels einem Ultraschallschweißverfahren verbunden sind. Die Faltungen weisen dabei im Wesentlichen geradlinige Flanken auf.

Abweichend davon zeigt die Druckschrift EP 0667800 B1 ein Filterelement mit einer Folge von Faltungen, die anstelle geradliniger Flanken gekrümmte Flanken aufweisen.

Nachteilig an der Sternfaltung und der gekrümmten Faltung ist, dass für ein vom Filterelement ausgefülltes Volumen eine Filterfläche klein ist, bzw. das dem Filterelement zur Verfügung stehende Volumen wenig effektiv für die Filterfläche genutzt ist. Somit ist eine Filterleistung und eine Standzeit des Filterelementes bis zu einer Verblockung durch Schmutzpartikel klein. Wird eine Faltenhöhe zur Vergrößerung der Filterfläche vergrößert, so verringert sich dabei in nachteiliger Weise eine Stabilität des Filterelementes. Einer Vergrößerung der Filterfläche durch diese einfache geometrische Änderung der Faltenhöhe steht somit ein Stabilitätsverlust des Filterelementes gegenüber. Weiterhin kommt es bei einer Vergrößerung der Faltenhöhe vermehrt zu einem Verblocken der Falten durch gefilterte Partikel, was zu einer Degradation der Filterleistung führt. Eine Beweglichkeit der Faltungen ist dabei abhängig von der Faltenhöhe und von einer Anzahl der Faltungen des Filterelementes.

Dem gegenüber liegt der Erfindung die Aufgabe zugrunde, ein Filterelement zu schaffen, das für ein ihm zur Verfügung stehendes Volumen eine verbesserte Filterleistung aufweist.

Diese Aufgabe wird gelöst durch ein Filterelement mit den Merkmalen des Patentanspruchs 1 sowie durch ein Filterelement mit den Merkmalen des Patentanspruchs 15.

Vorteilhafte Weiterbildungen des Filterelementes sind in den Patentansprüchen 2 bis 14 beschrieben.

Das erfindungsgemäße Filterelement zur Filterung eines Fluids, insbesondere eines Hydraulik-Fluids oder eines Belüftungsstromes, hat eine Folge von Hauptfaltungen, die insbesondere wellen-, zahn-, lamellen- oder faltenförmig ausgestaltet sind. Erfindungsgemäß ist an einer der Hauptfaltungen eine Nebenfaltung angeordnet. Für ein gegebenes Volumen des Filterelementes weist dieses aufgrund der Nebenfaltung eine vergrößerte Filterfläche und somit eine erhöhte Filterleistung auf. Ein weiterer Vorteil der Nebenfaltung ist, dass sie zu einer Erhöhung einer Stabilität des Filterelementes beiträgt. Die Hauptfaltungen sind bevorzugt zueinander im Wesentlichen parallel angeordnet. Ebenso ist die Nebenfaltung bevorzugt im Wesentlichen parallel zu der einen Hauptfaltung, an der sie angeordnet ist.

In einer besonders bevorzugten Weiterbildung des Filterelementes weist die eine Hauptfaltung, an der die Nebenfaltung angeordnet ist, eine erste Flanke und eine zweite Flanke auf. Die Nebenfaltung ist dabei an der zweiten Flanke angeordnet. Eine Filterung von Schmutzpartikeln kann somit an der einen Hauptfaltung besonders gut an der zweiten Flanke, an der die Nebenfaltung angeordnet ist, erfolgen.

Alternativ oder ergänzend dazu ist zudem an der ersten Flanke der einen Hauptfaltung eine Nebenfaltung angeordnet, so dass eine Filterfläche und damit eine Filterleistung der Hauptfaltung, und damit des Filterelementes, weiter erhöht ist.

Um einen Abstand zwischen der ersten Flanke und der zweiten Flanke der einen Hauptfaltung einstellen zu können, ist die erste und zweite Flanke über einen Verbindungsabschnitt, insbesondere des Filterelementes, verbunden. Dies ist insbesondere dann vorteilhaft, wenn sowohl an der ersten als auch an der zweiten Flanke eine Nebenfaltung angeordnet ist.

Eine Ausnutzung des dem Filterelement zur Verfügung gestellten Volumens ist dann besonders gut wenn die Flanke, an der einer Nebenfaltung angeordnet ist, zumindest abschnittsweise gegen eine Anlageseite des Filterelementes angestellt ist. Besonders bevorzugt ist es wenn die Flanke im Wesentlichen normal oder etwa normal gegen die Anlageseite angestellt ist. Dadurch erhöht sich die Ausnutzung des dem Filterelement bereitgestellten Volumens weiter. Ergänzend dazu ist es besonders bevorzugt, wenn beide Flanken, also die erste und die zweite Flanke der einen Hauptfaltung, gegen die Anlageseite angestellt sind.

In einer besonders vorteilhaften Weiterbildung des Filterelementes ist eine Flanke der Nebenfaltung gegen diejenige Flanke der einen Hauptfaltung, an der die Nebenfaltung angeordnet ist, angestellt. Auch diese Anstellung ist bevorzugt im Wesentlichen normal oder etwa normal.

Durch die Folge von Hauptfaltungen ergibt es sich, dass benachbarte Flanken zweier benachbarter Hauptfaltungen zumindest abschnittsweise eine Zulaufrinne des Filterelementes begrenzen. Besonders die Zulaufrinne, die durch die Flanke mit der Nebenfaltung begrenzt ist, weist dabei aufgrund der vergrößerten Filterfläche dieser Flanke eine besonders gute Filterleistung auf.

Bei einer besonders bevorzugten und vorteilhaften Weiterbildung des Filterelementes ist eine Höhe der einen Hauptfaltung größer als eine Höhe der Nebenfaltung.

Ganz besonders vorteilhaft ist es, wenn an der ersten Flanke der einen Hauptfaltung und / oder an der zweiten Flanke der einen Hauptfaltung eine Vielzahl von Nebenfaltungen angeordnet ist. Auf diese Weise ist die Filterleistung des Filterelementes durch die Vergrößerung der Filterfläche weiter erhöht.

In einer besonders bevorzugten und besonders vorteilhaften Weiterbildung des Filterelementes ist eine Vielzahl der Hauptfaltungen gemäß der einen Hauptfaltung ausgestaltet. Somit hat die Vielzahl der Hauptfaltungen eine Nebenfaltung oder mehrere Nebenfaltungen, so dass die Filterleistung des Filterelementes weiter erhöht ist. Besonders bevorzugt ist dabei wenn die Vielzahl der Hauptfaltungen gleich der einen Hauptfaltung ist, so dass eine Fertigung bzw. eine Faltung des Filterelementes vereinfacht ist. Ganz besonders bevorzugt sind alle Hauptfaltungen gemäß der einen Hauptfaltung ausgestaltet. Von dieser gleichartigen Ausgestaltung ausgenommen sein können jedoch insbesondere eine erste und / oder eine letzte der Hauptfaltungen, da diese beispielsweise aufgrund von Einbaubedingungen des Filterelementes oder anderen geometrischen Randbedingungen bevorzugt abweichend gestaltet sein können.

In einer besonders bevorzugten und kompakten Weiterbildung des Filterelementes ist dieses im Wesentlichen kreiszylindrisch ausgebildet. Besonders einfach ist das Filterelement dann gestaltet, wenn die eine Hauptfaltung und die eine Nebenfaltung bzw. die Hauptfaltungen und die Nebenfaltungen parallel zu einer Längsachse des Kreiszylinders angeordnet sind. Das kreiszylindrische Filterelement eignet sich besonders gut für einen Einsatz in einem Strömungszyklonfilter, da in diesem Zentrifugalkräfte eine Filterleistung des Filterelementes unterstützen und das Filterelement in seiner kreiszylindrischen Ausgestaltung diese Zentrifugalkräfte ermöglicht.

Das Filterelement ist bevorzugt über eine Mehrzahl von Schichten aufgebaut, wobei zumindest eine der Schichten Kunststoff, insbesondere in Form eines Kunststoffgitters aufweist. Das Kunststoffgitter bzw. der Kunststoff verleiht den Faltungen (sowohl den Hauptfaltungen als auch den Nebenfaltungen) eine erhöhte Stabilität.

Besonders bevorzugt ist dabei wenn eine erste und / oder eine letzte der Schichten des Filterelementes den Kunststoff bzw. das Kunststoffgitter aufweist.

Damit das Filterelement eine geschlossene, insbesondere kreiszylindrische Form aufweisen kann, und dabei die Anlageseite druckmitteldicht gegen eine Zulaufseite des Filterelementes abdichtbar ist, sind zwei Endabschnitte des Filterelementes miteinander stoffschlüssig, insbesondere über Ultraschallschweißen, verbunden. Die stoffschlüssige Verbindung spart ansonsten notwendige Verbindungselemente, wie beispielsweise einen Clip, ein, und verringert so einen Fertigungsaufwand für das Filterelement. Für die Ultraschallschweißverbindung erweist es sich als besonders vorteilhaft, wenn die Kunststoffschicht bzw. das Kunststoffgitter des Filterelementes die erste und / oder die letzte Schicht ist.

Restliche Schichten des Filterelementes bestehen vorzugsweise aus Glasfaser-, Filterpapier (Cellulose), Kunststoffvlies oder allgemein aus Vliesstoff.

In einer weiteren Ausführung wird anstelle des Kunststoffgitters oder -gewebes, ein Stützgewebe aus epoxiertem Eisendrahtgewebe oder aus Edelstahldraht verwendet.

Die Ultraschall-Verbindung der Endabschnitte kann auch formschlüssig über ein Hilfsmittel erfolgen.

Ein erfindungsgemäßes Filterelement zur Filterung eines Fluids, insbesondere eines Hydraulik-Fluids, hat eine Folge von Hauptfaltungen, die insbesondere wellen-, zahn-, lamellen- oder faltenförmig ausgestaltet sind, und die jeweils eine erste und eine zweite Flanke aufweisen. Diese Flanken sind dabei gegen eine Anlageseite des Filterelementes angestellt. Erfindungsgemäß ist an der ersten und / oder an der zweiten Flanke eine Vielzahl von Nebenfaltungen angeordnet, die jeweils eine Flanke aufweisen, die gegen diejenige Flanke der Hauptfaltung, an der die Nebenfaltungen angeordnet sind, angestellt ist. Durch diese Nebenfaltungen ist für ein gegebenes Volumen des Filterelementes eine Filterfläche vergrößert und eine Filterleistung des Filterelementes verbessert. Die zusätzlichen Nebenfaltungen erhöhen zudem eine strukturelle Stabilität des Filterelementes. Bevorzugt sind dabei die Hauptfaltungen und die Nebenfaltungen zueinander im Wesentlichen parallel angeordnet.

Die Anmelderin behält sich vor, auf einen Filtereinsatz und / oder einen Filter mit dem erfindungsgemäßen Filterelement eine Patentanmeldung zu richten.

Im Folgenden werden zwei Ausführungsbeispiele eines erfindungsgemäßen Filterelementes anhand von sechs Figuren näher erläutert. Es zeigen:
Figur 1 ein erstes Ausführungsbeispiel eines Filterelementes in einer perspektivischen Ansicht;
Figur 2 ein Detail des ersten Ausführungsbeispiels gemäß Figur 1 in einer perspektivischen Ansicht;
Figur 3 das erste Ausführungsbeispiel gemäß den Figuren 1 und 2 in einer Teil-Seitenansicht;
Figur 4 ein zweites Ausführungsbeispiel eines Filterelementes in einer perspektivischen Ansicht;
Figur 5 ein Detail des zweiten Ausführungsbeispiels gemäß Figur 4 in einer perspektivischen Ansicht; und
Figur 6 das zweite Ausführungsbeispiel gemäß den Figuren 4 und 5 in einer Teil-Seitenansicht.

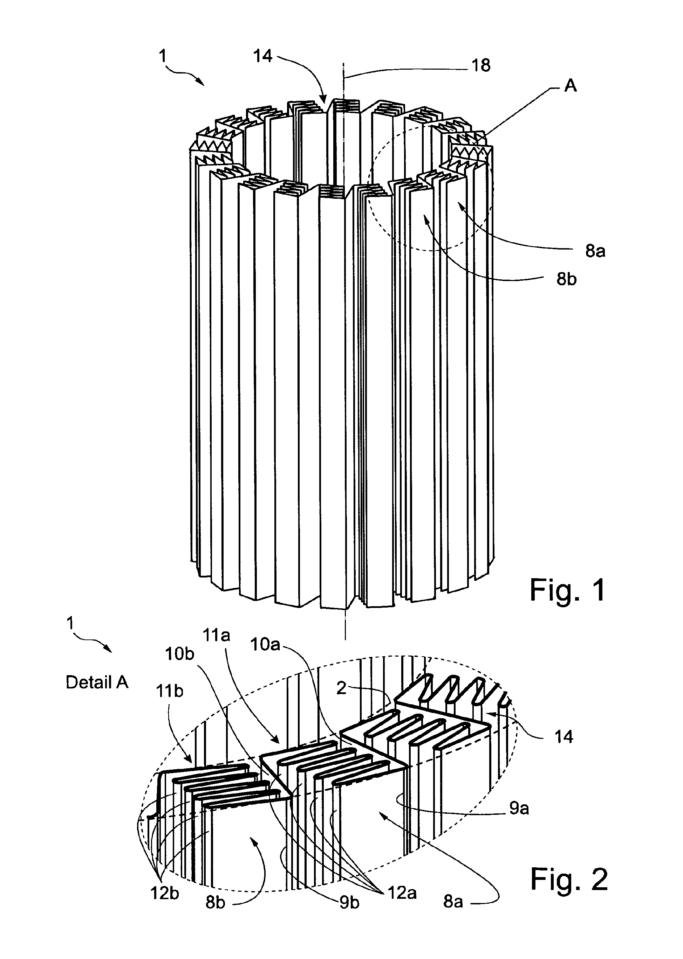

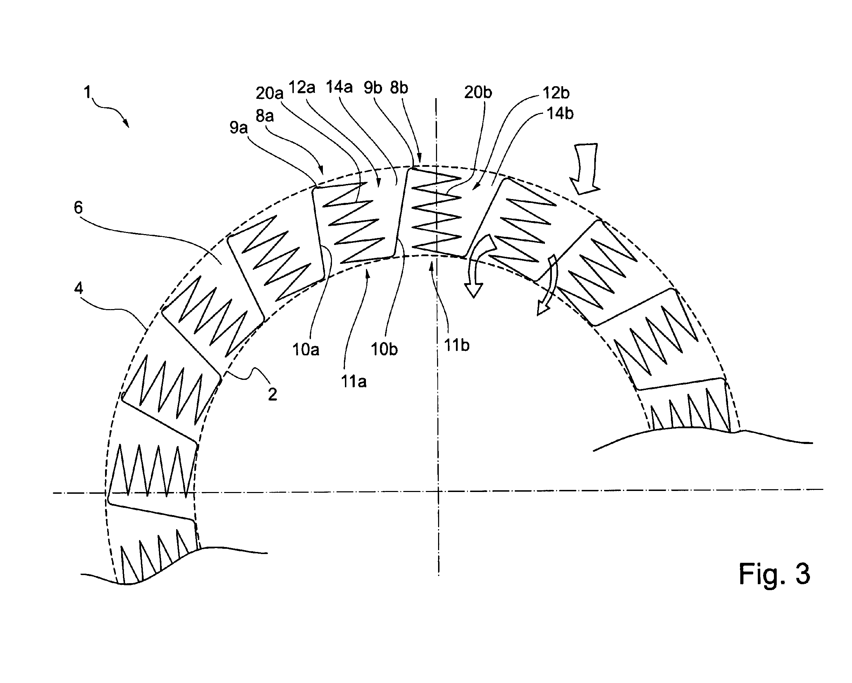

Figur 1 zeigt ein erstes Ausführungsbeispiel eines erfindungsgemäßen Filterelementes 1 zur Übersicht in einer perspektivischen Ansicht. Das Filterelement 1 erstreckt sich kreiszylindrisch um eine Mittelachse 18. In Figur 1 oben ist eine Zulaufrinne 14, über die zu filterndes Druckmittel radial von außen zuströmen kann, als etwa V-förmige Lücke erkennbar. Hauptfaltungen 8a, 8b erstrecken sich in Figur 1 von oben bis unten parallel zur Mittelachse 18. An den Hauptfaltungen 8a, 8b sind zur erfindungsgemäßen Vergrößerung der Filterfläche bzw. der Filterleistung des Filterelementes 1 Nebenfaltungen 12a, 12b angeordnet. Eine eingehendere Beschreibung des ersten Ausführungsbeispiels erfolgt anhand der Figuren 2 und 3.

Figur 2 zeigt ein Detail des Filterelementes 1 gemäß dem ersten Ausführungsbeispiel der Figur 1 in einer perspektivischen Ansicht. Gut zu erkennen ist eine Folge der Hauptfaltungen 8 bzw. 8a, 8b, die sich in Figur 2 von rechts oben nach links unten erstreckt. Etwa geradlinige erste Flanken 10a, 10b der Hauptfaltungen 8a, 8b gehen an Scheiteln 9a, 9b in mit den Nebenfaltungen 12a, 12b versehene zweite Flanken 11a, 11b über.

Figur 3 zeigt das erste Ausführungsbeispiel des erfindungsgemäßen Filterelementes 1 gemäß den Figuren 1 und 2 in einer Teil-Seitenansicht. Das Filterelement 1 hat eine Anlageseite 2, die sich kreiszylindrisch in die Betrachtungsebene der Figur 1 hinein erstreckt, und über die das Filterelement 1 mit einer ebenso kreiszylindrisch geformten Außenfläche eines Stützkorbes eines Strömungszyklonfilters (nicht dargestellt) in Anlage bringbar ist. Die Anlageseite 2 ist dabei auf der Reinseite des Filterelementes 1 angeordnet. Radial gegenüber der Anlageseite 2 ist eine Zulaufseite 4 angeordnet. In einem Volumen 6 zwischen der Anlageseite 2 und der Zulaufseite 4 erstreckt sich die Folge von Hauptfaltungen 8, von denen aus Gründen der Übersichtlichkeit in Figur 1 lediglich die zwei Hauptfaltungen 8a, 8b mit Bezugszeichen versehen sind. Eine Beschreibung der Folge von Hauptfaltungen erfolgt stellvertretend anhand der beiden Hauptfaltungen 8a, 8b.

Die beiden Hauptfaltungen 8a, 8b haben erste Flanken 10a, 10b, die in Figur 1 von der Anlageseite 2 bis zur Zulaufseite 4 ansteigen. An den Scheiteln 9a, 9b der Hauptfaltungen 8a, 8b gehen die ersten Flanken 10a, 10b in zweite absteigende Flanken 11a, 11b über. Im Gegensatz zu den überwiegend geradlinigen ersten Flanken 10a, 10b sind die zweiten Flanken 11a, 11b nicht geradlinig ausgestaltet. Stattdessen sind an ihnen eine Vielzahl von Nebenfaltungen 12a, 12b angeordnet, so dass die zweiten Flanken 11a, 11b einen etwa lamellenartigen Verlauf aufweisen. Über die Nebenfaltungen 12a der zweiten Flanke 11a der Hauptfaltung 8a und die erste Flanke 10b der Hauptfaltung 8b ist die Zulaufrinne 14a in Umfangsrichtung des Filterelementes 1 und zur Anlageseite 2 hin begrenzt.

In einem bestimmungsgemäßen Betrieb des Filterelementes 1 strömt ein zu säuberndes Druckmittel über die Zulaufseite 4 in die Zulaufrinnen 14a, 14b und in die anderen nicht bezeichneten Zulaufrinnen des Filterelementes 1 ein. Dieser Vorgang wird in Figur 1 durch den oben rechts dargestellten Pfeil symbolisiert. Das Druckmittel wird dabei zwischen Flanken 20a, 20b der Nebenfaltungen 12a, 12b gezwungen und durchströmt das Filterelement 1 bis es hin zur Anlageseite 2, gemäß dem dort eingezeichneten Pfeil, gefiltert austritt.

Durch die erfindungsgemäß an den zweiten Flanken 11a, 11b angeordneten Nebenfaltungen 12a, 12b ist die Filterfläche der zugehörigen Hauptfaltung 8a, 8b und der anderen Hauptfaltungen 8 größer, als wenn zweite Flanken der Hauptfaltungen 8a, 8b einen herkömmlichen geradlinigen oder nur leicht gekrümmten Verlauf hätten. Diese Anordnung wirkt sich positiv auf ein Schmutzaufnahmevermögen und eine Rückhalterate des Filterelements aus. Zu dem ist eine Verblockung des Filterelementes 1 verringert und somit seine Standfestigkeit des Filterelementes 1 erhöht.

Neben dieser Verbesserung der Filterleistung des Filterelementes 1 resultiert die Anordnung der Nebenfaltungen 12a, 12b an den zweiten Flanken 11a, 11b auch in einer Erhöhung der Stabilität des Filterelementes 1. Dies rührt daher, dass kleinere Faltungen einen stabilisierenden Effekt auf das Filterelement 1 haben. Aufgrund der Vielzahl der Nebenfaltungen 12a, 12b ist dabei trotz der kleineren Höhe der Nebenfaltungen 12a, 12b die Filterfläche des Filterelementes 1 vergrößert.

Das Filterelement 1 vereint somit eine vergrößerte Filterfläche mit einer erhöhten Stabilität durch die erfindungsgemäße Anordnung der Nebenfaltungen 12a, 12b an den zweiten Flanken 11a, 11b der Hauptfaltungen 8a, 8b bzw. 8. Alle Hauptfaltungen 8, 8a, 8b sind dabei gleichartig in Form und Neigung der Flanken 10a, 10b, 11a, 11b, und in Form und Anzahl der Nebenfaltungen 12a, 12b. Die ersten Flanken 10a, 10b sind dabei überwiegend normal zur Anlageseite 2 angestellt. Ebenso sind die zweiten Flanken 11a, 11b zumindest abschnittsweise normal zur Anlageseite 2 angestellt. Durch die Anstellung der Flanken 10a, 11a und 10b, 11 b in Verbindung mit der Vielzahl der Nebenfaltungen 12a, 12b ergibt sich für eine geforderte Filterfläche des Filterelementes 1 ein besonders geringes benötigtes Volumen 6 des Filterelementes 1.

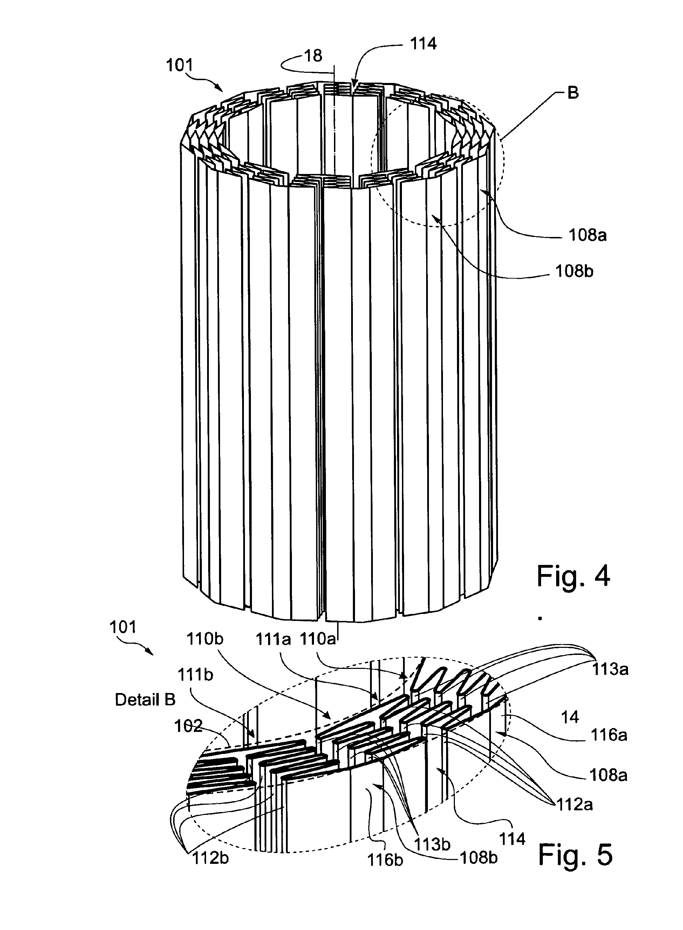

Figur 4 zeigt ein zweites Ausführungsbeispiel eines erfindungsgemäßen Filterelementes 101 in einer perspektivischen Ansicht.

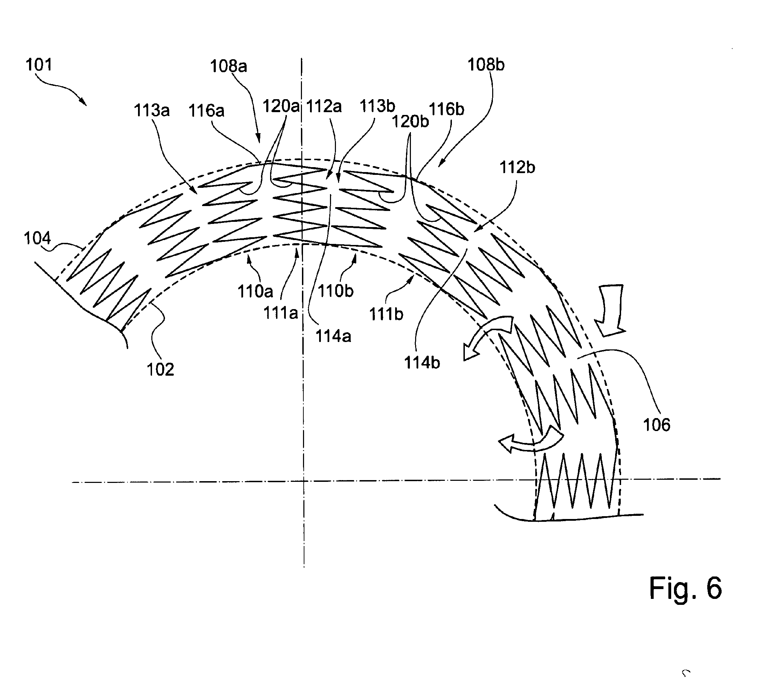

Das Filterelement 101 erstreckt sich ebenso wie beim ersten Ausführungsbeispiel gemäß den Figuren 1 bis 3 kreiszylindrisch um die Mittelachse 18. In Figur 4 oben ist eine Zulaufrinne 114, über die zu filterndes Druckmittel radial von außen zuströmen kann, als etwa V-förmige Lücke erkennbar. Hauptfaltungen 108a, 108b erstrecken sich in Figur 4 von oben bis unten parallel zur Mittelachse 18. An den Hauptfaltungen 108a, 108b sind zur erfindungsgemäßen Vergrößerung der Filterfläche bzw. der Filterleistung des Filterelementes 101 Nebenfaltungen angeordnet. Eine eingehendere Beschreibung des zweiten Ausführungsbeispiels erfolgt anhand der Figuren 5 und 6.

Figur 5 zeigt ein Detail des zweiten Ausführungsbeispiels des erfindungsgemäßen Filterelementes 101 gemäß Figur 4 mit den Hauptfaltungen 108a und 108b. Abweichend vom ersten Ausführungsbeispiel gemäß den Figuren 1 bis 3 gehen mit Nebenfaltungen 113a, 113b versehene erste Flanken 110a, 110b der Hauptfaltungen 108a, 108b an Verbindungsabschnitten 116a, 116b in mit Nebenfaltungen 112a, 112b versehene zweite Flanken 111a, 111b über. Die Verbindungsabschnitte 116a, 116b ermöglichen dabei eine Stapelung der Nebenfaltungen 113a, 113b, 112a, 112b in einer Richtung normal zu einer Anlageseite 102. Die ersten 110a, 110b und zweiten Flanken 111a, 111b der Hauptfaltungen 108a, 108b sind zueinander spiegelsymmetrisch. Jede einzelne Hauptfaltung 108a, 108b des Filterelementes 101 weist aufgrund dieser Symmetrie mehr Nebenfaltungen 113a, 113b, 112a, 112b auf als die einzelne Hauptfaltung (8a, 8b, vgl. Fig. 1 bis 3) des Filterelementes 1 des ersten Ausführungsbeispiels. Das Filterelement 101 hat dadurch für eine geforderte Filterfläche oder Filterleistung gegenüber dem Filterelement des ersten Ausführungsbeispiels weniger Hauptfaltungen und ist kompakter ausgestaltet.

Figur 6 zeigt das zweite Ausführungsbeispiel des erfindungsgemäßen Filterelementes 101 gemäß den Figuren 4 und 5 in einer Teil-Seitenansicht. Abweichend vom ersten Ausführungsbeispiel gemäß den Figuren 1 bis 3 weisen beim zweiten Ausführungsbeispiel Hauptfaltungen 108a, 108b nicht nur an der zweiten Flanke 111 a, 111 b, sondern auch an der ersten Flanke 110a, 110b Nebenfaltungen 113a und 113b auf. Aufgrund dieser zusätzlichen Nebenfaltungen 113a, 113b sind die Hauptfaltungen 108a, 108b im Vergleich zu den Hauptfaltungen gemäß Figur 1 (vgl. 8a, 8b) breiter. Aufgrund der kompakteren Bauweise hat das Filterelement 101 ein geringeres Volumen 106 als das Filterelement 1 des ersten Ausführungsbeispiels. Die Hauptfaltungen 108a, 108b weisen zur Verbindung ihrer ersten und zweiten Flanken 110a, 110b und 111a, 111b die Verbindungsabschnitte 116a, 116b auf. Durch sie ist es möglich, dass die Nebenfaltungen 113a und 112a bzw. 113b und 112b innerhalb der Hauptfaltungen 108a, 108b zueinander beabstandet sind und dass Zulaufrinnen 114a, 114b in Umfangsrichtung des Filterelementes 101 schmal ausgebildet sind.

Beide Filterelemente 1; 101 weisen als filternde Schicht ein Faserlaufwerk auf. Davon abweichend ist es möglich, dass ein erfindungsgemäßes Filterelement eine siebartige Schicht aufweist. Bei beiden Filterelementen 1; 101 ist aufgrund der durch die Nebenfaltungen erhöhten strukturellen Stabilität ein herkömmliches epoxiertes Drahtgewebe durch ein Kunststoffgitter ersetzt. Dieses ermöglicht es, dass Endabschnitte der Filterelemente 1; 101 über ein Ultraschallschweißverfahren stoffschlüssig miteinander verbunden sind (nicht dargestellt). Ein Verbindungselement, wie beispielsweise ein Clip oder eine schwierig zu fügende Klebenaht, entfällt somit.

Abweichend von den gezeigten Ausführungsbeispielen kann das Filterelement eine zylindrische Form mit ovalem oder eckigem Querschnitt oder eine nicht-zylindrische, beispielsweise kegel- oder kegelstumpfförmige, Form aufweisen. Das Filterelement kann auch planar oder etwa planar und / oder flächig ausgebildet sein. Um beispielsweise ein gegebenes Volumen noch flexibler durch das Filterelement nutzen zu können, können die Hauptfaltungen der Folge oder die Vielzahl von Nebenfaltungen voneinander abweichend, beispielsweise mit unterschiedlicher Höhe oder unterschiedlicher Flankenform, ausgestaltet sein. Die Hauptfaltungen der Folge können voneinander abweichende Anzahlen von Nebenfaltungen aufweisen.

Offenbart ist ein Filterelement zur Filterung eines Fluids, insbesondere eines Hydraulik-Fluids, mit einer Folge von Hauptfaltungen, wobei erfindungsgemäß an zumindest einer der Hauptfaltungen eine Nebenfaltung angeordnet ist.

### Bezugszeichenliste

- 1: Filterelement
- 2; 102: Anlageseite
- 4; 104: Zulaufseite
- 6; 106: Volumen
- 8, 8a, 8b; 108, 108a, 108b: Hauptfaltung
- 9a, 9b: Scheitel
- 10a, 10b; 110a, 110b: Erste Flanke Hauptfaltung
- 11a, 11b; 111a, 111b: Zweite Flanke Hauptfaltung
- 12a, 12b; 112a, 112b: Nebenfaltung
- 113a, 113b: Nebenfaltung
- 14, 14a, 14b; 114, 114a, 114b: Zulaufrinne
- 116a, 116b: Verbindungsabschnitt
- 18: Mittelachse
- 20a, 20b; 120a, 120b: Flanke Nebenfaltung

## Patentansprüche

1. Filterelement zur Filterung eines Fluids, insbesondere eines Hydraulik-Fluids, mit einer Folge von Hauptfaltungen (8, 8a, 8b; 108, 108a, 108b), **dadurch gekennzeichnet, dass** an einer der Hauptfaltungen (8, 8a, 8b; 108, 108a, 108b) eine Nebenfaltung (12a, 12b; 112a, 112b, 113a, 113b) angeordnet ist.

2. Filterelement nach Patentanspruch 1, wobei die eine Hauptfaltung (8, 8a, 8b; 108, 108a, 108b) eine erste Flanke (10a, 10b; 110a, 110b) und eine zweite Flanke (11a, 11b; 111a, 111b) hat, und wobei die Nebenfaltung (12a, 12b; 112a, 112b) an der zweiten Flanke (11a, 11b; 111a, 111b) angeordnet ist.

3. Filterelement nach Patentanspruch 2, wobei zudem eine Nebenfaltung (113a, 113b) an der ersten Flanke (110a, 110b) angeordnet ist.

4. Filterelement nach einem der vorhergehenden Patentansprüche, wobei die erste Flanke (110a, 110b) und die zweite Flanke (111a, 111b) über einen Verbindungsabschnitt (116a, 116b) verbunden sind.

5. Filterelement nach einem der Patentansprüche 2 bis 4, wobei die Flanke (11a, 11b; 110a, 110b, 111a, 111b) an der die Nebenfaltung (12a, 12b; 113a, 113b, 112a, 112b) angeordnet ist, zumindest abschnittsweise gegen eine Anlageseite (2; 102) des Filterelementes (1; 101) angestellt ist.

6. Filterelement nach einem der Patentansprüche 2 bis 5, wobei eine Flanke (20a, 20b; 120a, 120b) der Nebenfaltung (12a, 12b; 112a, 112b, 113a, 113b) gegen die Flanke (11a, 11b; 110a, 110b, 111a, 111b) der einen Hauptfaltung (8, 8a, 8b; 108 108a, 108b), an der die Nebenfaltung (12a, 12b; 113a, 113b, 112a, 112b) angeordnet ist, angestellt ist.

7. Filterelement nach einem der vorhergehenden Patentansprüche, wobei über benachbarte Flanken (11 a, 10b; 111 a, 110b) zweier benachbarter Hauptfaltungen (8a, 8b; 108a, 108b) zumindest abschnittsweise eine Zulaufrinne (14a; 114a) des Filterelementes (1; 101) begrenzt ist.

8. Filterelement nach einem der vorhergehenden Patentansprüche, wobei eine Höhe der einen Hauptfaltung (8, 8a, 8b; 108, 108a, 108b) größer als eine Höhe der Nebenfaltung (12a, 12b; 113a, 113b, 112a, 112b) ist.

9. Filterelement nach einem der Patentansprüche 2 bis 8, wobei an der ersten Flanke (110a, 110b) der einen Hauptfaltung (108, 108a, 108b) und / oder an der zweiten Flanke (11a, 11b; 111a, 111b) der einen Hauptfaltung (8, 8a, 8b; 108, 108a, 108b) eine Vielzahl Nebenfaltungen (12a, 12b; 113a, 112a, 113b, 112b) angeordnet ist.

10. Filterelement nach einem der vorhergehenden Patentansprüche, wobei eine Vielzahl der Hauptfaltungen (8, 8a, 8b; 108, 108a, 108b) gemäß der einen Hauptfaltung (8, 8a, 8b; 108, 108a, 108b) ausgestaltet ist.

11. Filterelement nach einem der vorhergehenden Patentansprüche, das kreiszylindrisch ist.

12. Filterelement nach einem der vorhergehenden Patentansprüche, mit einer Mehrzahl von Schichten, wobei eine der Schichten Kunststoff, insbesondere in Form eines Kunststoffgitters, aufweist.

13. Filterelement nach Patentanspruch 12, wobei eine erste und / oder eine letzte der Schichten den Kunststoff aufweist.

14. Filterelement nach einem der vorhergehenden Patentansprüche, wobei zwei Endabschnitte des Filterelementes miteinander stoff- oder formschlüssig verbunden sind.

15. Filterelement zur Filterung eines Fluids, insbesondere eines Hydraulik-Fluids, mit einer Folge von Hauptfaltungen (8, 8a, 8b; 108, 108a, 108b), die jeweils eine erste Flanke (10a, 10b; 110a, 110b) und eine zweite Flanke (11a, 11b; 111a, 111b) haben, die gegen eine Anlageseite (2; 102) des Filterelementes (1; 101) angestellt sind, **dadurch gekennzeichnet, dass** an der ersten Flanke (110a, 110b) und / oder der zweiten Flanke (11a, 11b; 111a, 111b) eine Vielzahl von Nebenfaltungen (12a, 12b; 113a, 112a, 113b, 112b) angeordnet ist, die jeweils eine Flanke (20a, 20b; 120a, 120b) haben, die gegen die Flanke (11a, 11b; 110a, 110b, 111a, 111b) der Hauptfaltung (8, 8a, 8b; 108, 108a, 108b), an der sie angeordnet sind, angestellt ist.
